# EUROPEAN PATENT APPLICATION

(11) **EP 3 923 642 A1**
(43) Date of publication of application: **15.12.2021**
(21) Application number: 21177517.6
(22) Date of filing: 03.06.2021
(51) Int. Cl.: H04W 60/00, H04W 68/00, H04W 76/27

(54) **RADIO ACCESS NETWORK NOTIFICATION AREA (RNA) CONFIGURATION BASED ON SERVICE CLASS**

(30) Priority: 10.06.2020 IN 202041024383
(71) Applicant: Nokia Technologies Oy, 02610 Espoo (FI)
(72) Inventor: LASELVA, Daniela, Klarup (DK); KHLASS, Ahlem, Paris (FR); CHANDRASHEKAR, Subramanya, Bangalore (IN)
(74) Representative: Nokia EPO representatives

(57) **Abstract**

Systems, methods, apparatuses, and computer program products for configuring radio access network area code areas and/or providing radio access network notification area configurations to user equipment are provided.

## Description

### RELATED APPLICATIONS:

The present application claims priority from India Patent Application No. 202041024383, filed on June 10, 2020, which is hereby incorporated in its entirety.

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for configuring radio access network area code (RANAC) areas and/or providing proper radio access network notification area (RNA) configurations to user equipment (UEs).

### BACKGROUND

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

### SUMMARY:

According to some aspects, there is provided the subject matter of the independent claims. Some further aspects are defined in the dependent claims.

### BRIEF DESCRIPTION OF THE DRAWINGS:

For proper understanding of example embodiments, reference should be made to the accompanying drawings, wherein:
Fig. 1 illustrates an example of the NR RRC state machine, according to certain embodiments;
Fig. 2 illustrates an example of Suspend Configuration information element (IE);
Fig. 3 illustrates an example signaling diagram depicting a UE triggered resume procedures with successful UE context retrieval, according to an embodiment;
Fig. 4 illustrates an example signaling diagram of an RNA update procedure with UE context relocation, according to an embodiment;
Fig. 5 illustrates an example signaling diagram of periodic RNA update procedure without UE context relocation, according to an embodiment;
Fig. 6 illustrates an example signaling diagram that depicts the case when the RNAU is completed with the last serving gNB that decides to move the UE to RRC_IDLE, according to an embodiment;
Fig. 7 illustrates an example RNA configuration, according to an embodiment;
Fig. 8 illustrates an example signaling diagram depicting Xn setup, according to an embodiment;
Fig. 9 illustrates a system diagram of the division of the cells/gNBs of the same tracking area into a certain number of RANACs;
Fig. 10 illustrates an example flow diagram of a method, according to an embodiment;
Fig. 11 illustrates an example flow diagram of a method, according to an embodiment;
Fig. 12 illustrates an example implementation of the RAN mobility Areas and corresponding RNA configuration for a UE, according to one embodiment;
Fig. 13 illustrates an example of service-based RANACs within a Tracking Area and PLMN, according to an embodiment;
Fig. 14a illustrates an example block diagram of an apparatus, according to an embodiment; and
Fig. 14b illustrates an example block diagram of an apparatus, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for configuring radio access network area code (RANAC) areas and/or providing proper radio access network notification area (RNA) configurations to user equipment (UEs), is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

As will be discussed in detail in the following, certain embodiments may relate to how to configure the RANAC areas and to provide proper RNA configurations to UEs while taking into account the requested service(s). An embodiment may include causing the network to configure a service/slice-based RAN Notification Area (RNA) to a UE requesting a given service/slice, whose size may depend on the requested service/slice (e.g., eMBB, URLLC, mMTC, operator configured slice, etc.). For example, an RNA having a larger size can be used for delay tolerant services, leading to a signaling reduction, and higher paging delays tolerated by these services. As another example, an RNA having a smaller size can be used for serve delay-stringent services, leading to a higher RNAU rate and lower paging delays.

Some embodiments may be directed to an optimized configuration regarding the RRC_INACTIVE state, for example, with a goal to reduce signalling and/or RRC connection resume failure events.

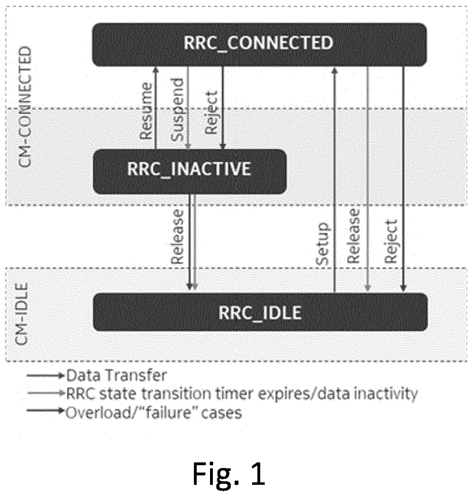

In addition to the existing RRC states of RRC_CONNECTED and RRC_IDLE, a new independent RRC state, referred to as RRC_INACTIVE, has been introduced with a goal to reduce UE power consumption by alleviating the Control Plane (CP) procedures required at the RRC state change and associated latency. Fig. 1 illustrates an example of the NR RRC state machinery, according to certain embodiments.

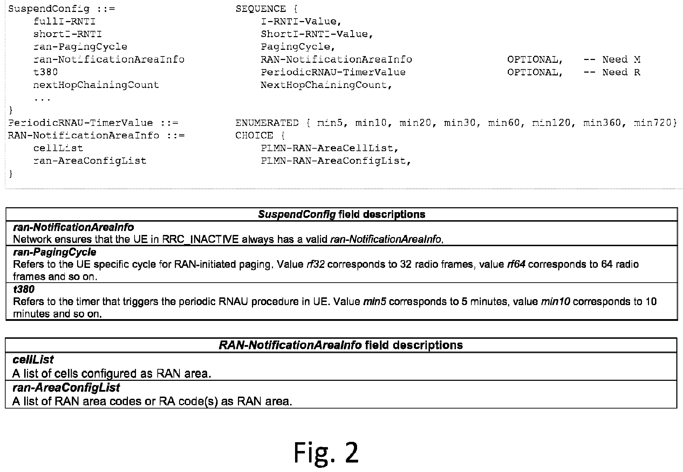

As illustrated in the example of Fig. 1, when a UE is in RRC_INACTIVE state, the radio connection is suspended while the core network connectivity is maintained active, i.e., the UE is kept in Connection Management (CM)-CONNECTED state. A UE Access Stratum (AS) context (referred to as UE Inactive AS context) is stored at both the UE and RAN sides for the fast resume of a suspended connection, including the latest radio bearer configuration used for the data/signalling transmission, and the security keys and algorithms for integrity protection and ciphering in the radio interface. Based on this retained information, the UE can resume the radio connection and restore the security context with a much lower delay and associated signalling overhead as compared to a UE in RRC_IDLE state that needs to establish a new connection to both the radio and core network. The network can move a UE from RRC_CONNECTED to RRC_INACTIVE by sending an RRC Release including a SuspendConfig information element. Fig. 2 illustrates one example of such a SuspendConfig IE.

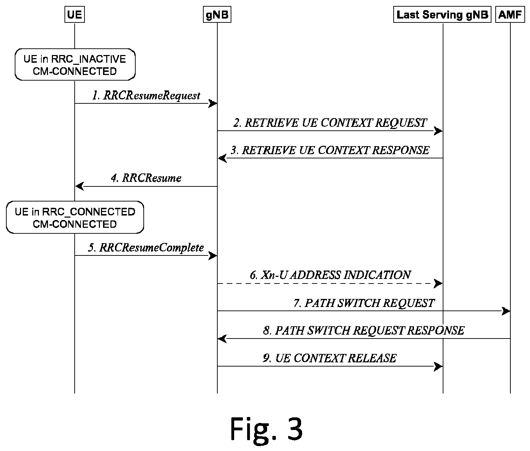

A UE in RRC Inactive state can request to resume its suspended RRC connection prior to uplink (UL) data transmission, in response to a paging message for downlink (DL) data reception, and/or for the RAN-based Notification Area Update (RNAU) procedure discussed below. Fig. 3 illustrates an example signaling diagram depicting a UE triggered resume procedures with successful UE context retrieval, according to an embodiment. As illustrated in the example of Fig. 3, if the UE attempts to access a gNB (i.e., a target cell) other than the anchor gNB, such target cell has to initiate a XnAP retrieve UE context procedure to fetch the UE AS context from the anchor gNB, identified through the inactive radio network temporary identifier (I-RNTI). This may also trigger an Xn-UP address indication procedure including tunnel information for potential recovery of data from the anchor gNB. Upon successful UE context retrieval, the receiving gNB becomes the serving gNB and the UE is then moved to RRC_CONNECTED state. A NGAP path switch procedure may further be initiated to update the user plane (UP) connection to the 5G core network from the anchor gNB to the new serving gNB. Once completed, the serving gNB releases the UE context at the anchor gNB by means of the XnAP UE context release procedure.

For mobility handling for a UE in RRC_INACTIVE state, the UE can be configured by the last serving NG-RAN node with a UE-specific RAN-based Notification Area (RNA), i.e., RAN-NotificationAreaInfo, which can cover a single or multiple cell(s) belonging to one or multiple gNBs. Inside this area, a UE can move without any notification to the network about its location (i.e., cell (re)-selections within the RNA are transparent to the network). The network can page the UE with RAN-level paging from any cell within the RNA. Also, the UE can resume the RRC connection in any cell within the RNA using its unique identifier, i.e., the I-RNTI, using which a gNB should be able to identify both the last serving gNB node, also referred to as the anchor gNB, and the UE itself. The anchor gNB may also keep the UE-associated connection with the serving access and mobility management function (AMF) and user plane function (UPF). There are several different alternatives on how the RNA can be configured, for example, either as a list of cells or a list of RAN areas. For instance, a UE may be provided with an explicit list of one or more cells that constitute the RNA. Alternatively or additionally, the UE may be provided with one or more RAN area ID(s) where a RAN area is a subset of a CN tracking area (TA) or equal to a CN tracking area. A RAN area may be specified by one RAN area ID, which is comprised of a tracking area code (TAC) and optionally a RAN area code (RANAC). A cell can broadcast one or more RAN area IDs in system information.

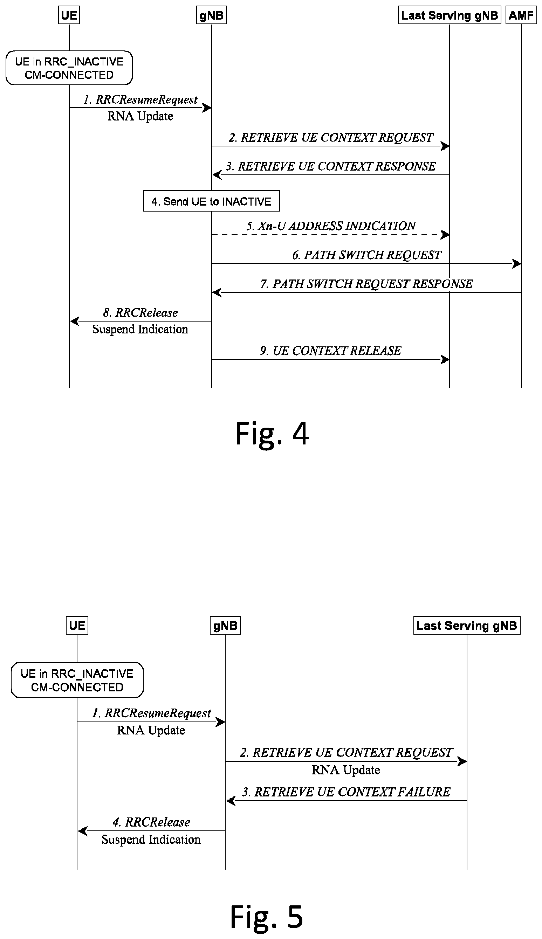

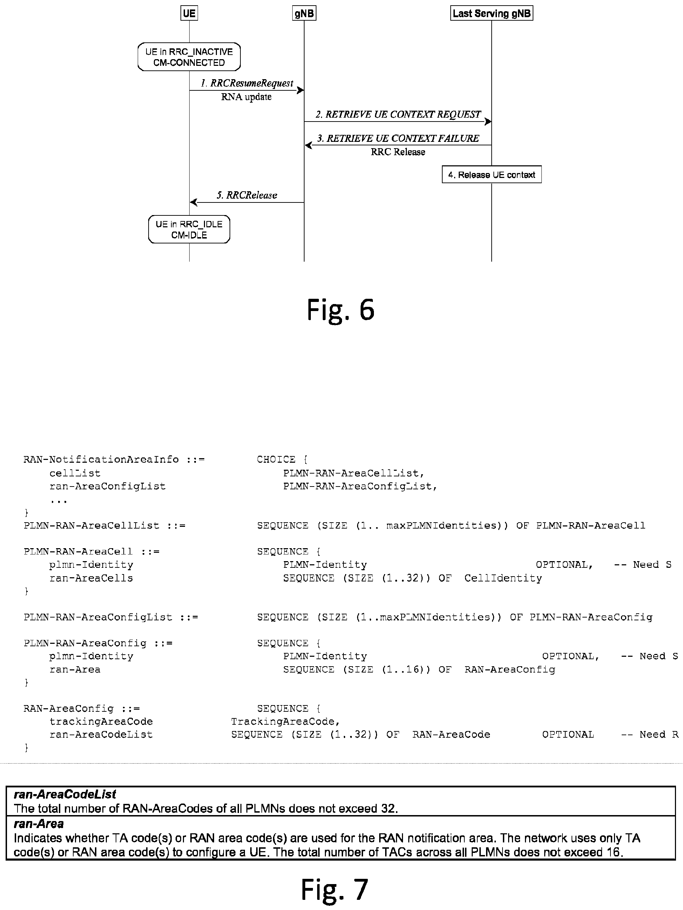

A UE should trigger a RAN-based Notification Area Update (RNAU) procedure periodically and/or whenever it re-selects a cell outside the configured RNA. The procedure can be completed successfully both with and without context relocation as shown in the examples of Fig. 4 and Fig. 5, respectively. Fig. 4 illustrates an example signaling diagram of an RNA update procedure with UE context relocation, and Fig. 5 illustrates an example signaling diagram of periodic RNA update procedure without UE context relocation. No UE context relocation is needed if the UE is within the configured RNA based on the last serving gNB decision not to relocate the UE context. In this case, the UE is maintained in RRC _INACTIVE state. Fig. 6 illustrates an example signaling diagram that depicts the case when the RNAU is completed with the last serving gNB that decides to move the UE to RRC_IDLE.

Fig. 7 illustrates an example RNA configuration. The RNA may include a list of RAN Areas, where the network can configure to a UE an RNA (RAN-NotificationAreaInfo) with a list of up to 16 RAN-AreaConfig per public land mobile network (PLMN), each of which includes a TAC and optionally up to 32 RAN-AreaCodes. However, there is a limitation of max 32 RAN-AreaCodes in total.

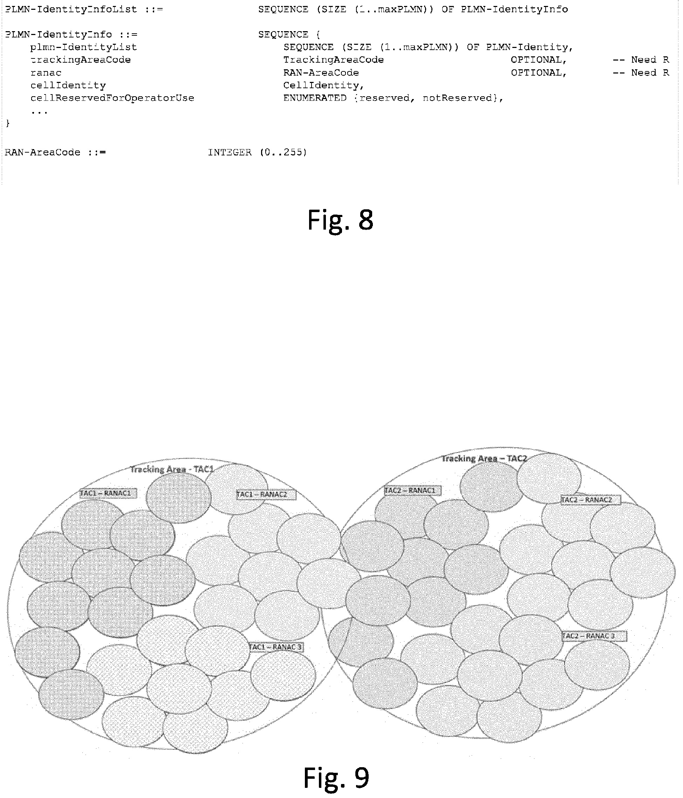

Fig. 8 illustrates an example signaling diagram depicting Xn setup, according to an embodiment. In order to enable a gNB to configure appropriate RNAs, a gNB may need to acquire the knowledge of the RANAC allocation of neighbour gNB cells. Thus, the RANAC assigned to a cell is exchanged during Xn setup and NG-RAN node configuration update in served cell information IE and neighbour cell information IE, as illustrated in the example signaling diagram of Fig. 8.

In an embodiment, the XN setup messages may contain, among other things, the information shown in Table 1 below.

**TABLE 1**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | reject |
| **Global NG-RAN Node ID** | M | | 9.2.2.3 | | YES | reject |
| TAI Support List | M | | 9.2.3.20 | List of supported TAs and associated characteristics. | YES | reject |
| AMF Region Information | M | | 9.2.3.83 | Contains a list of all the AMF Regions to which the NG-RAN node belongs. | YES | reject |
| **List of Served Cells NR** | | *0* .. *<maxnoofCells -inNG-RAN node>* | | Contains a list of cells served by the gNB... | YES | reject |
| **>Served Cell Information NR** | M | | 9.2.2.11 | | - | |
| **>Neiqhbour Information NR** | O | | 9.2.2.13 | | - | |
| ... | | | | | | |

Small data transmission (SDT) in INACTIVE state seeks to avoid the signalling overhead and delay associated with transition from RRC_INACTIVE to RRC_CONNECTED to perform a short and small data transmission. This functionality may be important, since a goal of introducing the RRC _INACTIVE state was to be able to transition UEs with infrequent data transmission to a state with minimum signalling overhead and power consumption.

As described above, each UE can be configured with a RNA as either an explicit list of cells that constitute the RNA or a list of RAN areas. In certain embodiments, it may be assumed that the network configures the UE-specific RNA using a list of RAN areas. A RAN area may be a subset of a CN Tracking Area or equal to the entire CN Tracking Area and, therefore, it is specified by one RAN area ID that is comprised of a TAC and optionally a list of RANACs. A RANAC is an integer that is used to identify a RAN area within the scope of a tracking area, for the case that the RAN area does not coincide with the entire TA. Each cell broadcasts at least one RAN-AreaCode in the system information (SIB 1), as depicted in the IE of Fig. 8, i.e., one RANAC per PLMN. By reading this IE in SIB1, a UE knows which RANAC the cell belongs to and, thus, it can determine whether the cell belongs or not to its assigned list of RANACs that constitutes its RNA (based on a matching procedure against its stored RNA).

To support RRC Inactive operations, it may be beneficial for the network to divide the cells/gNBs of the same tracking area into a certain number of RANACs, as illustrated in the example of Fig. 9 (rather than operating the RNA with the TA-level granularity). This allows for configuration of RNAs of reasonable size by assigning to a UE a certain number of RANACs with the same TAC. In turn, this ensures that the UE context retrieval can be successfully performed within tolerable delays for a mobile UE that moves within its assigned RNA and may resume its connection in any cell within the RNA.

As illustrated in the example of Fig. 9, the cells having the same color broadcast the same RANAC, i.e., RANAC 1, RANAC 2, or RANAC 3. The cells with a pattern fill show an example of RNA Config, i.e., RAN Area 1 could be provided to a UE by setting RAN-AreaConfig = TAC1 + {RANAC1, RANAC3}.

It may be up to the network implementation as to how to assign each cell to a distinct RANAC consistently in a geographical area. One solution would be to divide each TA in RANACs of same sizes (say N) and assign N neighbour cells to each RANAC similarly to the example illustrated in Fig. 9. However, this one-size fits all solution may be suboptimal. On the one hand, it may lead to a large amount of network signalling and increased latency for context retrieval if N is large. On the other hand, it may lead to frequent RNA updates (RNAU) when crossing the RNA borders if N is small. In fact, in the latter case, when a UE in the RRC inactive state moves to a cell that does not belong to its currently assigned RNA, the UE has to perform a location-update procedure that enables the RAN to update the assigned RNA, thereby increasing the associated radio signalling.

Therefore, it may be desirable that the division of RAN areas considers the above-mentioned conflicting objectives. On one side, the RAN Areas should be made as small as possible with the aim of configuring small RNAs for UEs with demanding services to decrease delays for these UEs. On the other side, to configure a large RNA to UEs having less demanding services, the network desires to reduce the required signalling, which can be achieved if the RAN areas are large (i.e., a small list of RANACs can be then provided to the UE). On the contrary, the smaller the RAN areas the larger the number of RAN areas becomes, and in turn, larger signalling would be required. It is noted that there are also signalling restrictions in place currently, which limit the maximum number of RANACs that an RNA can contain and that may pose limits to the size of the RAN Areas.

Certain embodiments are directed to a process to configure the RANAC areas and provide proper RNA configurations to the UEs to limit the issues described above and while taking into account the requested service(s).

Certain embodiments provide a method that may be employed at the network to configure a service/slice-based RNA to a UE requesting a given service/slice. In one embodiment, the size of the RNA may depend on the requested service/slice (e.g., eMBB, URLLC, mMTC, operator configured slice, etc.). An RNA having a larger size can be used for delay tolerant services (e.g., eMBB UEs) leading, for example, to a lower RNAU rate for signaling reduction and higher paging delays that should be tolerated by these services. On the other hand, a smaller RNA size can be beneficial to serve delay-stringent services (e.g., URLLC UEs) leading, for example, to a higher RNAU rate and lower paging delays. This strategy allows for consumption of more resources for RRC Inactive UEs when needed (e.g., based on the service requirements) and otherwise minimizes the resources consumption to make it affordable. For each RNA, a set of rules may be applied with respect to, e.g., whether to retrieve the UE AS context or forward an SDT payload from the target cell to the anchor cell (rather than retrieving the UE AS context).

As a result, certain embodiments provide a flexible definition of the RNA as a UE specific mobility area that can be configured and adapted to the UE's slices and/or services. In an embodiment, a definition of proper rules for each configured RNA (RAN Areas) may also be provided so that the network can adjust the procedures that are needed per mobility area. In addition, some embodiments provide for the construction of RAN mobility layers for RRC Inactive UEs, based on slices and/or services and configuring UEs in such a way that both the network and UE benefit without the compromises that were previously necessary. In other words, according to an embodiment, the signaling is reduced for those UEs which can afford a large RNA and latency is improved for those UEs with delay-sensitive services. Further, an embodiment provides algorithm(s) and/or heuristic that enable to consistently configure UEs to their corresponding RAN mobility layer throughout the network and sharing this information among the gNB(s) of the deployment.

Accordingly, certain embodiments provide for the optimization of the per-UE RRC signaling of the RNA to enable service specific RNAs for RRC Inactive mode mobility. Some embodiments may be configured to broadcast multiple RANACs in the same cell per PLMN to allow the UE to identify the correct mobility layer while performing RNA updates.

In an embodiment, the UE's RNA configuration, which may be sent upon moving the UE to RRC Inactive state, comprises a set of RAN (mobility) Areas. Each of the RAN areas may have a unique RAN area ID, such as a RAN Area Code (RANAC). According to certain embodiments, the size of each service-based RNA (in terms of the number of associated RAN Areas/RANACs and the number of cells per RAN Area/RANAC) may be based on the service classes and/or slices that the UE needs. In some embodiments, at least two approaches may be provided as discussed in more detail below. For instance, in one approach, the RNA may include a set of RANACs with the set size depending on the requested service and, in another approach, the RNA may include a single RANAC or RAN area with the size being defined flexibly based on the service class or slice.

For example, according to one embodiment, the RNA of a UE requesting a service may comprise a set of RANACs, where the set size depends on the requested service. The set may include at least the RAN Area of the anchor cell and potentially neighbor RAN Areas. A RAN Area may be statically defined and its size may be based on the service with the highest priority (e.g., with most stringent requirements) among the set of services to provide in the area.

In this embodiment, a tracking area of a PLMN may be divided semi-statically in (substantially) even-sized non-overlapping RAN Areas, where the number of cells per RAN Area can be set in a meaningful way based on the services to be provided (i.e., based on their priorities and amount of UEs requesting them) in order to ensure flexibility.

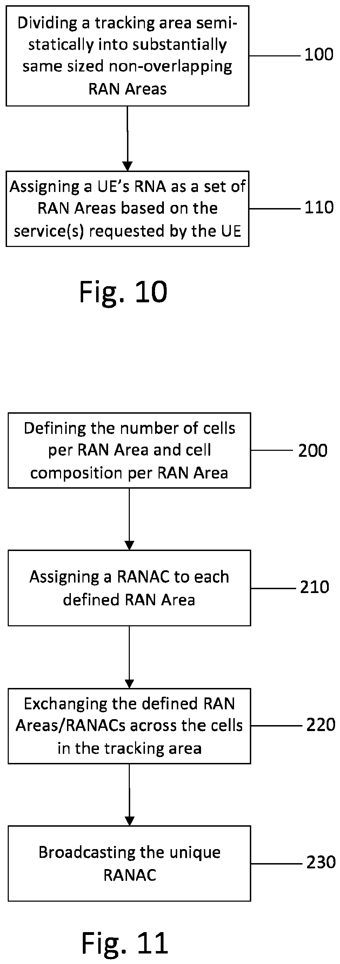

Fig. 10 illustrates an example flow diagram of a method, according to an embodiment. In certain example embodiments, the flow diagram of Fig. 10 may be performed by a network entity or network node in a communication system, such as LTE or 5G NR. For instance, in some example embodiments, the network node performing the method of Fig. 10 may include a base station, access node, eNB, gNB, and/or NG-RAN node, or the like.

As illustrated in the example of Fig. 10, the method may include, at 100, dividing a tracking area of a PLMN semi-statically into (substantially) even-sized non-overlapping RAN Areas, where the number of cells per RAN Area is based on the services to be provided. In an embodiment, the method may also include, at 110, assigning a UE's RNA as a set of RAN Areas (including one or more of them) based on the service(s) requested by the UE (i.e., the services the UE requested in RRC Connected state, before being moved to RRC Inactive).

Fig. 11 illustrates an example flow diagram of a method for dividing a Tracking Area (TA) in RAN Areas based on the services to support in the TA (e.g., corresponding to procedure 100 of Fig. 10), according to an embodiment. As illustrated in the example of Fig. 11, the method may include, at 200, defining the number of cells (N) per RAN Area and cell composition per RAN Area. A cell can be assigned with a single RAN Area and neighbor cells can be assigned to the same RAN Area. In one example, the size of the RAN Area may be directly dependent on the most delay-sensitive service or slice offered in that RAN Area. In an embodiment, when the number of UEs to support that are requesting a delay stringent service (or with stringent delay requirement), such as URLLC/eURLLC UEs, is above a certain threshold, the defining 200 may include constructing the number of cells (N) per RAN Area and cell composition per RAN Area to ensure that packet delay budget is met if a UE with the most stringent delay requirements would resume or trigger SDT for data transfer in one or more of the cells in the RAN area. For example, a RAN Area should contain gNBs/cells having direct and fast Xn connectivity. Otherwise, when the number of UEs to support requesting a delay stringent service (e.g., URLLC/eURLLC UEs) is not above the certain threshold (e.g., majority are eMBB UEs), then the defining 200 may include constructing the number of cells (N) per RAN Area and cell composition per RAN Area to minimize the RNA signaling for UEs with less stringent delay.

As further illustrated in the example of Fig. 11, the method may include, at 210, assigning a RANAC to each defined RAN Area and, at 220, exchanging the defined RAN Areas/RANACs across the gNBs/cells in the tracking area along with the delay budget for context retrieval/data forward within the RAN Area. It is noted that a cell is aware of what RANAC is assigned to another cell. The method of Fig. 11 may also include, at 230, a cell broadcasting its unique RANAC.

Referring again to the example of Fig. 10, for a UE with most stringent delay requirements or services (e.g., URLLC/eURLLC UE), when the anchor cell RAN Area can ensure packet delay budget for this UE, the assigning 110 may include configuring the UE's RNA to be equal to the RANAC of the anchor cell. When the anchor cell RAN Area cannot ensure packet delay budget for the UE with the most delay stringent requirement, the assigning 110 may include configuring the UE's RNA to be equal to a dedicated list of cells comprising the anchor cell and/or a limited set of neighbors among the ones having direct Xn connectivity with the anchor cell. For a UE requesting a prioritized delay tolerant service (e.g., eMBB-prioritized UE), the assigning 110 may include configuring the UE's RNA to be equal to: { RANAC of the anchor cell; M neighbor RANACs}, where M is a network parameter that depends on target RNAU rate, paging delay, etc. For a UE requesting a best effort delay tolerant service (e.g., eMBB best effort UE), the assigning 110 may include configuring the UE's RNA to be equal to the Tracking Area Code.

As a result of the methods illustrated in Figs. 10 and 11, the defined RAN Areas are provisioned to the gNBs/cells in the tracking area and the cells are assigned with a single RAN Area (single RANAC) and different neighbor cells can be assigned with a given RANAC, being this way in the same RAN Area. In certain embodiments, network consistency of this information across NG RAN nodes can be verified based on Xn exchange (e.g., via Served Cell Information NR IE). The defined RAN Areas may then be the building blocks when constructing an RNA specific to a UE, which will include a smaller or larger set of these RANACs based on the service.

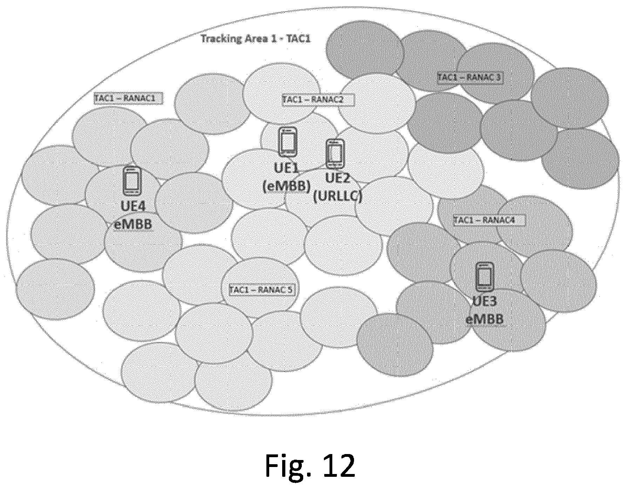

Fig. 12 illustrates an example implementation of the RAN mobility Areas and corresponding RNA Configuration for a UE, according to one embodiment. In particular, Fig. 12 depicts an example illustration of RANACs divisions (RANAC1, RANAC2, RANAC3, RANAC4, RANAC5) of a Tracking Area 1 (TAC1) and PLMN1, according to an embodiment. In the example of Fig. 12, it may be assumed that based on process of Fig. 11, the tracking area/PLMN is divided in the RAN mobility areas which are exchanged via Xn, as shown in Fig. 12, including RANAC1 (Light Blue gNBs), RANAC2 (Green gNBs), RANAC3 (Dark Blue gNBs), RANAC4 (Dark Grey gNBs), and RANAC5 (Light Grey gNBs). Therefore, according to the example of Fig. 12, each cell in the area broadcasts one RANAC and cells having the same color broadcast the same RANAC.

Based on these RAN Areas as building blocks, the RNA may be assigned on a per UE basis according to the assigning procedure 110, as discussed above. For the construction of the actual RNA for a given UE with a requested service, an embodiment may use certain RNA construction rules per service as shown in Table 2 below. It is noted that it is not excluded that additional UE specific metrics, such as UE mobility, may also be considered if available. However, certain embodiments may consider the service-based rules that take into account service-dependent targets that are network specific. These rules may include the maximum number of cells that can constitute the RNA of a UE in total and the maximum number of RANACs per RNA in order to support a given service. In this example, the tracking area may be assumed to provide two service classes (e.g., eMBB and URLLC) and two sub-services within each class (i.e., best effort and prioritized eMBB and URLLC and enhanced URLLC, eURLLC). The provided services can be extended to consider other services classes as well (e.g., eMTC) or additional sub-classes.

**TABLE 2**

| **Service** | **RNA construction rules based on service** |
|---|---|
| eMBB-best effort | RNA can contain a very large number of cells (e.g. > 50) and max no. of RANACs = (e.g.) 32 (as per current specs). |
| | The exact values are network parameters that depend on target RNAU rate, paging delay, etc. |
| eMBB-prioritized | RNA can contain a large number of cells (e.g. 50), and max no. of RANACs = (e.g.) 3 The exact values are network parameters that depend on target RNAU rate, paging delay, number of UEs in Inactive state and their RNAU rate, etc. |
| URLLC | RNA can contain a very small number of cells (e.g. 10) and max. (e.g.) 2 RANACs The exact values are network parameters that depend on data transfer delay, paging delay, etc. |
| eURLLC | RNA can contain a very small number of cells (e.g. <10) and max. (e.g.) 1 RANAC The exact values are network parameters that depend on data transfer delay, paging delay, etc. |

According to the RNA construction rules shown Table 2: an eMBB-best effort UE will be configured with an RNA comprising the entire Tracking Area; an eMBB-prioritized UE will be configured with an RNA comprising for example 3 neighbor RANACs including the RANAC of its anchor cell; an URLLC UE will be configured with an RNA comprising for example 2 neighbor RANACs including the RANAC of its anchor cell; and an eURLLC UE will be configured with an RNA comprising only the RANAC of its anchor cell.

When considering UE1-UE4 located as shown in the example of Fig. 12, requesting eMBB or URLLC services, their UE-specific RNA can be then configured as shown in Table 3 below, when applying the RNA construction rules according to their location. It is noted that for a UE requesting a combination of services, the UE would be configured according to the service having the most stringent requirements. For instance, if a UE has eMBB + URLLC services, such a UE will be configured with an RNA suitable for a URLLC UE, i.e., with the smallest RNA.

**TABLE 3**

| **UE** | **Requested Service** | **RNA Config (examples)** |
|---|---|---|
| UE1 | eMBB-best effort | TAC1 |
| | eMBB-prioritized | TAC1 + {RANAC1, RANAC2, RANAC3} |
| | | *Incl. the RANAC of the anchor cell and a limited no. (3)* of *RANACs around* |
| UE2 | URLLC | TAC1+ {RANAC2, RANAC4} |
| | | *Incl. the RANAC of the anchor cell and a very limited no. (2) of RANACs around* |
| | eURLLC | TAC1+ {RANAC2} |
| | | *Incl. the ANAC of the anchor cell only* |
| UE3 | eMBB-best effort | TAC1 |
| | eMBB-prioritized | TAC1 + {RANAC2, RANAC3, RANAC4} |
| | | *Incl. the RANAC of the anchor cell and a limited no. (3)* of *RANACs around* |
| UE4 | eMBB-best effort | TAC1 |
| | eMBB-prioritized | TAC1 + {RANAC1, RANAC2, RANAC5} |
| | | *Incl. the RANAC of the anchor cell and a limited no. (3)* of *RANACs around* |

As introduced above, in another embodiment, the RNA may include a single RANAC or RAN area with the size being defined flexibly based on the service class or slice. For example, in this embodiment, the RNA of a UE requesting a given service/slice may include a single RANAC/RAN Area, whose size is defined flexibly (can be scaled down/upwards) based on the service class and/or slice. This may be achieved by splitting the tracking area in a certain number of service-based RAN Areas/RANACs per each service to support, i.e., the split is done differently per service/slice. According to certain embodiments, each RAN Area/RANAC for the support of a given service may have the same or a substantially similar size. However, the size can be scaled downwards or upwards based on the needs of the service class and/or slice to support. Each set of the service-based RANACs in the tracking area assigned for a service and/or slice may be denoted as the RAN mobility Layer (RAN_ML) for the given service. It is noted that, in some embodiments, one RAN Mobility Layer is associated to a given service and/or slice in the entire tracking area, which is meant for enabling mobility of UEs in RRC Inactive state requesting that service and/or slice. In this embodiment, a cell can be assigned with (and broadcast) multiple partially overlapping RAN Areas of different sizes, i.e., one RANAC may be broadcasted per supported service class and/or slice.

Therefore, according to this embodiment, a NG RAN can create multiple RNAs in the RAN mobility layer of the network for a given service. The RNAs may each be represented by a different RAN Area ID (e.g., RANAC). This configuration in the UE enables it to identify whenever there is a change in the RNA. For example, at the transitioning to RRC Inactive state, a UE is configured with an RNA that includes the RAN Area ID (e.g., RANAC) belonging to the RAN mobility layer of the most delay-sensitive service or slice requested by the UE. The UE may perform RNA updates based on the RANACs broadcasted in SIB1 of the cell versus the RANAC configured to the UE. Also, the services and/or slices supported by the cell(s) per PLMN and their associated RAN mobility layer (i.e., the set of RANACs in the tracking area for the service) may be exchanged over the Xn interface to enable consistency of configuration of both gNBs and UEs. As an example, the RAN mobility layer constructed for eMBB will be (much) larger, then the RAN mobility layer mapped to URLLC.

This approach can reduce the size of the RRC messages for configuring the RNA to the UEs since each RNA contains a single RANAC, instead of including multiple RANACs to indicate the RNA. This also makes the configuration easier for the operator considering that it has to be done for a huge network. This implementation may be beneficial, for instance, when a new service has to be provided by the network, having rather different QoS characteristics than existing services (meaning that the existing RAN Areas may not be optimally sized for the new service). Therefore, the network (a cell) can start broadcasting an additional RANAC associated to the new service and create a dedicated RAN mobility layer for the new service. In this embodiment, a cell may broadcast multiple RANACs per PLMN, i.e., one RANAC per service and/or slice.

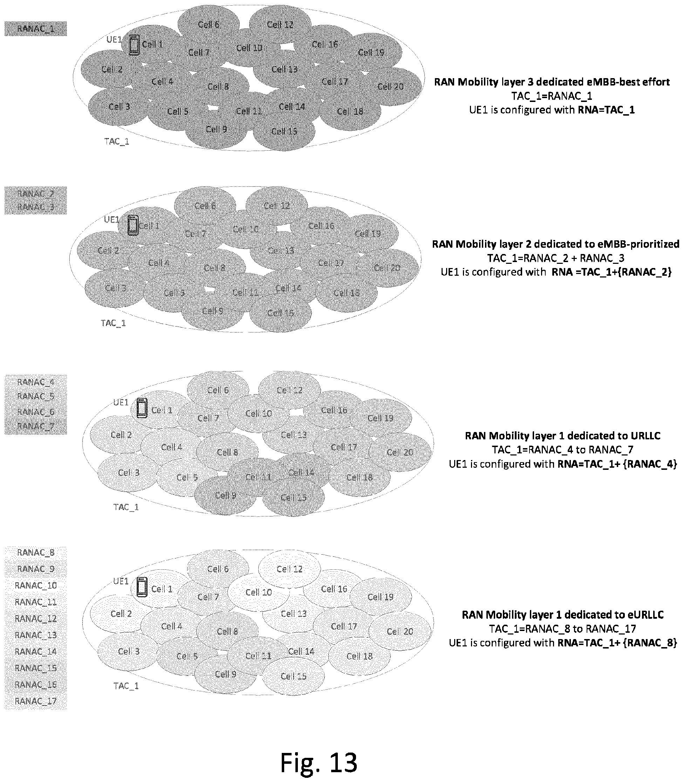

Fig. 13 illustrates an example of service-based RANACs within a Tracking Area 1 and PLMN1 according to the second approach discussed above, comprising four distinct RAN Mobility layer for four different services. In the example of Fig. 13, RAN Mobility Layer 1 is dedicated to Best effort-eMBB and it comprises RANAC 1 that is meant for eMBB-best effort UEs (see the top part of Fig. 13); RAN Mobility Layer 2 is dedicated to prioritized-eMBB and it comprises RANAC 2-3 that are meant for eMBB-prioritized UEs (see middle part of Fig. 13); RAN Mobility Layer 3 dedicated to URLLC comprises RANACs 4-7 that are meant for URLLC UEs (see the middle part of Fig. 13); and RAN Mobility Layer 4 is dedicated to eURLLC and it comprises RANACs 8-17 that are meant for eURLLC UEs (see the bottom part of Fig. 13).

One, more or all of the cells in the area broadcasts multiple RANACs belonging to the same PLMN to ensure proper INACTIVE mode mobility, i.e., one RANAC per RAN mobility layer per cell. For instance, in the example of Fig. 13, cell 1 broadcasts RANAC 1 of Layer 1 (darker blue), RANAC2 of Layer 2 (darker orange), RANAC3 of Layer 3 (lighter orange) and RANAC 8 of Layer 4 (yellow).

In an embodiment, there may be a static mapping established between a service layer and a set of RANACs. Such mapping between a service layer and a set of RANACs may be exchanged and/or disseminated across the cells in the entire tracking area, so that the gNBs are configured consistently. This operator defined information, for example provisioned via operations and management (O&M), may be exchanged over Xn during Xn setup/NG-RAN NODE Configuration Update message. For instance, an IE in the Xn setup can indicate the different services and/or slices or a combination thereof and also indicate the RANAC list (RAN Area) for each combination.

Once the RANACs/RAN mobility layers planning is made, it may be assumed that each gNB will be provisioned, e.g., via O&M with its RANAC(s) (per PLMN) to broadcast on SIB1, an associated RAN mobility layer per each of its RANAC, and/or the complete set of RANACs per RAN mobility layer. Part of this information may then be exchanged across the gNBs via Xn to ensure consistency of the configured information across gNBs of the network. Xn setup could be rejected in case of an inconsistent configuration. For this exchange, new signaling may be provided and examples of such signaling are discussed in the following.

As outlined above, certain embodiments introduce a process for a cell to broadcast multiple RANACs belonging to the same PLMN to ensure proper RRC INACTIVE mode mobility, i.e., one RANAC per RAN mobility layer per cell. This may impact, for instance, the IE in SIB1 related to RANAC. Additionally, certain embodiments may also impact the IEs defined to be exchanged over network interfaces. Table 4 below depicts an example of an updated IE containing cell configuration information of an NR cell that neighboring NG RAN node may need for the Xn AP interface, according to an embodiment. As shown in the example of Table 4, the updated IE may include a range for RANAC up to a maximum number of RANACs. Table 5 below depicts an example of an updated IE that defines the RAN Area Code. As shown in the example of Table 4 and Table 5, the definition of the RAN Area Code may include a RAN-Mobility-Layer associated to the RAN Area Code.

**TABLE 4**

| **IE/Group Name** | | | | **Presence** | **Range** | **IE type and reference** | **Semantics description** |
|---|---|---|---|---|---|---|---|
| NR-PCI | | | | M | | INTEGER (0..1007,...) | NR Physical Cell ID |
| NR CGI | | | | M | | 9.2.2.7 | |
| TAC | | | | M | | 9.2.2.5 | Tracking Area Code |
| RANAC | | | | O | **1..<maxnoofR ANACs>** | RAN Area Code 9.2.2.6 | |
| **Broadcast PLMNs** | | | | | *1..<maxnoofBP LMNs*> | | Broadcast PLMNs |
| | >PLMN Identity | | | M | | 9.2.2.4 | |
| CHOICE *NR-Mode-Info* | | | | M | | | |
| | *>FDD* | | | | | | |
| | | **>>FDD Info** | | | *1* | | |
| | | | >>>UL NR Frequency Info | M | | NR Frequency Info 9.2.2.19 | |
| | | | >>>DL NR Frequency Info | M | | NR Frequency Info 9.2.2.19 | |
| | | | >>>UL Transmission Bandwidth | M | | NR Transmission Bandwidth 9.2.2.20 | |
| | | | >>>DL Transmission Bandwidth | M | | NR Transmission Bandwidth 9.2.2.20 | |
| | >*TDD* | | | | | | |
| | | **>>TDD Info** | | | *1* | | |
| | | | >>>Frequency Info | M | | NR Frequency Info 9.2.2.19 | |
| | | | >>> Transmission Bandwidth | M | | NR Transmission Bandwidth 9.2.2.20 | |
| | | | >>>Intended TDD DL-UL Configuration NR | O | | 9.2.2.40 | |
| Measurement Timing Configuration | | | | M | | OCTET STRING | Contains the *MeasurementTimingConfiguration* inter-node message for the served cell, as defined in TS 38.331 [10]. |
| Connectivity Support | | | | M | | 9.2.2.28 | |
| **Broadcast PLMN** Identity **Info List NR** | | | | | *0..*<*maxnoofBP LMNs-1*> | | This IE corresponds to the *PLMN-IdentitylnfoList* IE in *SIB1* as specified in TS 38.331 [8]. The PLMN Identities and associated information contained in this IE are provided in the same order as broadcast in SIB1. |
| | **>Broadcast PLMNs** | | | | *1..<maxnoofBP LMNs*> | | Broadcast PLMNs |
| | | >>PLMN Identity | | M | | 9.2.2.4 | |
| | >TAC | | | M | | 9.2.2.5 | |
| | >NR Cell Identity | | | M | | BIT STRING (SIZE(36)) | |
| | >RANAC | | | O | **1..<maxnoof RANACs>** | RAN Area Code 9.2.2.6 | |

**TABLE 5**

| **IE/Group Name** | **Presence** | **Range** | **IE Type and Reference** | **Semantics Description** |
|---|---|---|---|---|
| RANAC | M | | INTEGER (0..255) | |
| **RAN-ML** | O | | | **RAN-Mobility-Layer associated to the RAN Area Code** |

Referring again to the example of Fig. 13, as one example, UE1 being within the coverage area of cell 1, may be assigned a service-based RNA configured at the RRC connection suspend (i.e., connection release with suspend indication), depending on the required service, containing one RANAC within the corresponding service layer as shown in Fig. 13 (on the right-hand side).

As an additional embodiment, certain pre-defined network actions could be associated to each RAN mobility layer as shown in Table 6 below. An embodiment may be configured to add a new Information Element in the RRC release message that indicates the UE's associated RAN Mobility layer. This information can be reported at the RRC resume request, thus enabling the target gNB to determine which layer the UE belongs in order to apply dedicated decisions/configurations per layer. For instance, a target gNB can determine whether it should retrieve the UE AS context upon receiving a resume request of a UE based on the RAN mobility area the UE is assigned to, thus accounting for the fact that an eMBB UE may tolerate a large delay than a URLLC UE. In the latter case, as an example, the associated rule could be to forward SDT to the anchor cell rather than retrieving the UE AS context and performing the path switch procedure.

**TABLE 6**

| **RAN mobility Layer** | **Static rules applied at the network (target / anchor gNB) for a RAN mobility Layer** | | **Justifications** |
|---|---|---|---|
| Layer for eMBB-best effort | • | No retrieval/relocation of the UE context within the RNA for any periodic RNAUs, only after N consecutive RNAUs | This service type may tolerate a large(r) delay at initial access. |
| | | | The periodic RNA update should be performed with a certain frequency to verify the presence of the UE in such a wide area. |
| | • | No retrieval/relocation of the UE context within the RNA at SDT/resume with data transfer | |
| | • | A not too large value is set for the *PeriodicRNAU-Timer* | |
| Layer for eMBB-prioritized | • | Retrieve the UE AS context upon resume requestAlways forward the payload from SDT to the anchor gNB | This service type may tolerate some delay |
| Layer for URLLC | • | UE context is retrieved at RANAC change | This service type cannot tolerate any delay for neither paging nor resume/SDT |
| | | ∘ Within a RANAC, always forward the payload (from SDT) to the anchor gNB | |
| | • | A medium / long value is set for the *PeriodicRNAU-Timer* | The periodic RNA update should be performed with low frequency due to the size of the RNA (contains a very small number of cells) |
| Layer for eULRLC | • | The UE context is stored at any cell in the RANAC to minimize any delay | This service type cannot tolerate any delay nor failure for neither paging nor resume/SDT |

It should be noted that, while certain embodiments described herein have been discussed with gNB as the network node, example embodiments are equally applicable to any NG RAN node that may appear in a 5G or other next generation network.

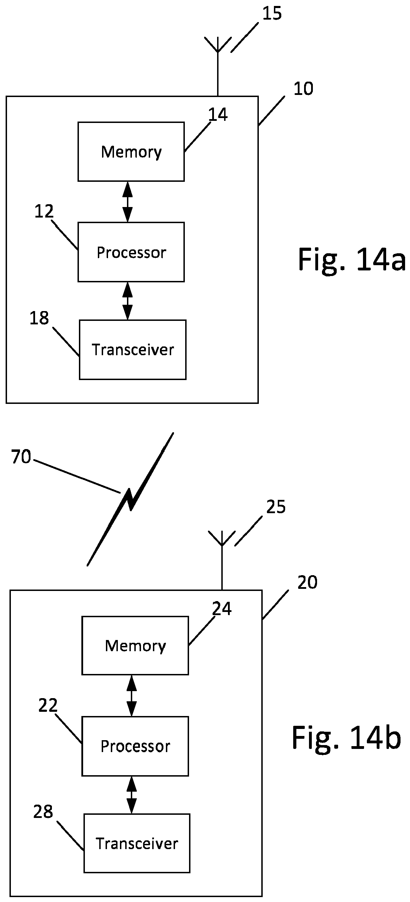

Fig. 14a illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), high altitude platform station (HAPS), integrated access and backhaul (IAB) node, and/or WLAN access point, associated with a radio access network, such as a LTE network, 5G or NR

It should be understood that, in some example embodiments, apparatus 10 may be comprised of an edge cloud server as a distributed computing system where the server and the radio node may be stand-alone apparatuses communicating with each other via a radio path or via a wired connection, or where they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 14a.

As illustrated in the example of Fig. 14a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples.

While a single processor 12 is shown in Fig. 14a, multiple processors may be utilized according to other example embodiments. For example, it should be understood that, in certain embodiments, apparatus 10 may include two or more processors that may form a multiprocessor system (e.g., in this case processor 12 may represent a multiprocessor) that may support multiprocessing. In some embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and/or receive information. The transceiver 18 may include, for example, a plurality of radio interfaces that may be coupled to the antenna(s) 15, or may include any other appropriate transceiving means. In certain embodiments, the radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and/or the like. According to an example embodiment, the radio interface may include components, such as filters, converters (e.g., digital-to-analog converters and the like), mappers, a Fast Fourier Transform (FFT) module, and/or the like, e.g., to generate symbols or signals for transmission via one or more downlinks and to receive symbols (e.g., via an uplink).

As such, transceiver 18 may be configured to modulate information on to a carrier waveform for transmission by the antenna(s) 15 and to demodulate information received via the antenna(s) 15 for further processing by other elements of apparatus 10. In other example embodiments, transceiver 18 may be capable of transmitting and receiving signals or data directly. Additionally or alternatively, in some embodiments, apparatus 10 may include an input device and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, HAPS, IAB node, WLAN access point, or the like. For example, in some embodiments, apparatus 10 may be configured to perform one or more of the processes depicted in any of the flow charts or signaling diagrams described herein, such as those illustrated in Figs. 3-6 or 9-13. In some embodiments, as discussed herein, apparatus 10 may be configured to perform a procedure relating to RNA configuration based on service class.

According to this embodiment, apparatus 10 may be controlled by memory 14 and processor 12 to determine or configure, for one or more UE(s) requesting a service or slice, a RNA in which the size of the RNA is based on the requested service or slice (e.g., eMBB, URLLC, mMTC, operator configured slice, etc.). For example, in an embodiment, the RNA may be configured to have a larger size that serve delay tolerant services (e.g., for eMBB UEs), which may lead to lower RNAU rate and higher paging delays. In another embodiment, the RNA may be configured to have a smaller size that can serve delay-stringent services (e.g., for URLLC UEs), which may lead to a higher RNAU rate and lower paging delays. In certain embodiments, apparatus 10 may be controlled by memory 14 and processor 12 to apply a set of rules to determine whether to retrieve UE AS context or forward an SDT payload from a target cell to an anchor cell.

In an embodiment, apparatus 10 may be controlled by memory 14 and processor 12 to provide the configured RNA to the UE(s). For instance, according to one embodiment, to provide the configured RNA, apparatus 10 may be controlled by memory 14 and processor 12 to send the configured RNA when the UE(s) are moving to RRC inactive state.

In one embodiment, apparatus 10 may be controlled to determine or configure the RNA such that it includes a set of RAN Areas. According to an embodiment, one or more of the RAN Areas may include a unique RAN area ID or RANAC. In this embodiment, apparatus 10 may be controlled by memory 14 and processor 12 to configure the size of the set of RAN Areas based on the requested service. The set may include at least the RAN Area of the anchor cell and potentially neighbor RAN Areas. According to an embodiment, when determining or configuring the RNA, apparatus 10 may be controlled by memory 14 and processor 12 to define a RAN Area statically where its size may be based on the service with the highest priority (e.g., with most stringent requirements) among the set of services to provide in the area.

In this embodiment, when defining the RAN Area, apparatus 10 may be controlled by memory 14 and processor 12 to divide a tracking area (TA) of a PLMN semi-statically in (substantially) same-sized non-overlapping RAN Areas, where the number of cells per RAN Area can be set based on the services to be provided (i.e., based on their priorities and amount of UEs requesting them) thereby ensuring flexibility.

According to an embodiment, to divide the TA or PLMN semi-statically into substantially same-sized non-overlapping RAN Areas, apparatus 10 may be controlled by memory 14 and processor 12 to define the number of cells (N) per RAN Area and cell composition per RAN Area. A cell can be assigned with a single RAN Area and neighbor cells can be assigned to the same RAN Area. In one example, the size of the RAN Area may be directly dependent on the most delay-sensitive service or slice offered in that RAN Area. In an embodiment, to define the number of cells per RAN Area, when the number of UEs to support having a delay stringent requirement or service (e.g., URLLC/eURLLC UEs) is above a certain threshold, apparatus 10 may be controlled by memory 14 and processor 12 to construct the number of cells (N) per RAN Area and cell composition per RAN Area to ensure that packet delay budget is met if a UE with the most stringent delay requirements would resume or trigger SDT for data transfer in one or more of the cells in the RAN area. For example, a RAN Area should contain gNBs/cells having direct and fast Xn connectivity. Otherwise, when the number of UEs to support with stringent delay requirement (e.g., URLLC/eURLLC UEs) is not above the certain threshold (e.g., when the majority are eMBB UEs), apparatus 10 may be controlled by memory 14 and processor 12 to construct the number of cells (N) per RAN Area and cell composition per RAN Area to minimize the RNA signaling for UEs with less stringent delay. In an embodiment, apparatus 10 may be controlled by memory 14 and processor 12 to assign a RANAC to each defined RAN Area and to exchange the defined RAN Areas/RANACs across the gNBs/cells in the tracking area along with the delay budget for context retrieval/data forward within the RAN Area. In some embodiments, apparatus 10 may be controlled by memory 14 and processor 12 to broadcasting its unique RANAC.

According to an embodiment, when determining or configuring the RNA, apparatus 10 may be further controlled by memory 14 and processor 12 to assign a UE's RNA as a set of RAN Areas (including one or more of them) based on the service(s) requested by the UE (i.e., the services the UE requested in RRC Connected state, before being moved to RRC Inactive). In one embodiment, to assign the UE's RNA, for a UE with most stringent delay requirements (e.g., eURLLC/URLLC UE), when the anchor cell's RAN Area can ensure that packet delay budget for this UE is met, apparatus 10 may be controlled by memory 14 and processor 12 to configure the UE's RNA to be equal to the RANAC of the anchor cell. In another embodiment, to assign the UE's RNA, when the anchor cell's RAN Area cannot ensure packet delay budget for the UE with the stringent delay requirements (e.g., URLLC/eURLLC UE), apparatus 10 may be controlled by memory 14 and processor 12 to configure the UE's RNA to be equal to a dedicated list of cells comprising the anchor cell and/or a limited set of neighbors among the ones having direct Xn connectivity with the anchor cell. In another embodiment, to assign the UE's RNA, for a UE requesting a prioritized delay tolerant service (e.g., a eMBB-prioritized UE), apparatus 10 may be controlled by memory 14 and processor 12 to configure the UE's RNA to be equal to: { RANAC of the anchor cell; M neighbor RANACs}, where M is a network parameter that depends on target RNAU rate, paging delay, etc. In another embodiment, to assign the UE's RNA, for a UE requesting a best-effort delay tolerant service (e.g., an eMBB-best effort UE), apparatus 10 may be controlled by memory 14 and processor 12 to configure the UE's RNA to be equal to the Tracking Area Code.

According to another embodiment, apparatus 10 may be controlled by memory 14 and processor 12 to configure the RNA to include a single RANAC or RAN area where the size of the RNA is defined flexibly based on the requested service class or slice. For example, in this embodiment, the RNA of a UE requesting a given service/slice may include a single RANAC/RAN Area, whose size is defined flexibly (can be scaled down/upwards) based on the service class and/or slice. In an embodiment, to configure the RNA with the flexibly defined size based on the service class and/or slice, apparatus 10 may be controlled by memory 14 and processor 12 to split the tracking area in a certain number of service-based RAN Areas/RANACs per each service to support, i.e., the split is performed differently per service/slice. According to certain embodiments, each RAN Area/RANAC for the support of a given service may have the same or a substantially similar size. However, apparatus 10 may be controlled to scale the size downwards or upwards based on the needs of the service class and/or slice to support. As discussed above, each set of the service-based RANACs in the tracking area assigned for a service and/or slice may be denoted as the RAN mobility Layer for the given service. In some embodiments, apparatus 10 may be controlled by memory 14 and processor 12 to associate one RAN Mobility Layer to a given service and/or slice in the entire tracking area, which can enable mobility of UEs in RRC Inactive state requesting that service and/or slice. In this embodiment, apparatus 10 may be controlled by memory 14 and processor 12 to assign a cell with (and broadcast) multiple partially overlapping RAN Areas of different sizes, i.e., one RANAC may be broadcast per supported service class and/or slice.

Therefore, according to this embodiment, apparatus 10 can create multiple RNAs in the RAN mobility layer of the network for a given service. The RNAs may each be represented by a different RAN Area ID or RANAC. This configuration enables the UE to identify whenever there is a change in the RNA. For example, at the transitioning to RRC Inactive state, apparatus 10 may be controlled by memory 14 and processor 12 to configure a UE with an RNA that includes the RAN Area ID or RANAC belonging to the RAN mobility layer of the most delay-sensitive service or slice requested by the UE. The UE may perform RNA updates based on the RANACs broadcasted in SIB 1 of the cell versus the RANAC configured to the UE. Furthermore, apparatus 10 may be controlled by memory 14 and processor 12 to exchange the services and/or slices supported by the cell(s) per PLMN and their associated RAN mobility layer over the Xn interface to enable consistency of configuration of gNBs and UEs.

Fig. 14b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 14b.

As illustrated in the example of Fig. 14b, apparatus 20 may include or be coupled to a processor 22 (or processing means) for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 14b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media, or other storage means. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 (or transceiving means) configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device) or input/output means. In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Figs. 3-6 or 10-11. In certain embodiments, apparatus 20 may be configured to perform or execute procedure(s) relating to RNA configuration based on service class, for instance. For example, in some embodiments, apparatus 20 may be controlled by memory 24 and processor 22 to receive and/or apply a service and/or slice based RNA, as discussed in detail above.

In an embodiment, apparatus 20 may be controlled by memory 24 and processor 22 to receive a RNA configured for the apparatus 20 by a network node. In some embodiments, apparatus 20 may be controlled by memory 24 and processor 22 to receive the RNA when the apparatus is or has moved to RRC inactive state. The RNA may include a set of RAN areas, where one or more of the RAN areas includes a unique RAN area ID or RANAC. According to an embodiment, apparatus 20 may be controlled by memory 24 and processor 22 to perform RNAU according to the RANAC of a RAN mobility layer that has been configured to the apparatus 20. In some embodiments, apparatus 20 may be requesting a service or slice from the network node, and a size of the RNA is based on the requested service or slice, as discussed in more detail above.

Therefore, certain example embodiments provide several technological improvements, enhancements, and/or advantages over existing technological processes and constitute an improvement at least to the technological field of wireless network control and management. For example, the network configuration of RAN mobility areas and RNAs can be improved when using example embodiments described herein. The RNA configuration on a per UE basis can follow construction rules taking into account the service class that the UE may be running and the requirements, as well as the operations related to RRC Inactive can be performed according to semi-static rules. As a result, the network can avoid employing a one-size fits all solution, which results in, for instance, controlling the number of RNAUs performed by an INACTIVE UE depending on the kind of slice or service it is using. As an example, an eMBB UE will performs less RNAUs, while an URLLC UE performs more of them. In this way, signaling may also be reduced and therefore processing as well. Furthermore, a gNB does not often need to allocate resources to bring INACTIVE UEs to CONNECTED for RNAU. Additionally, context fetches are avoided in unnecessary cases and latency of context fetch for delay-sensitive services is not compromised. Accordingly, the use of certain example embodiments results in improved functioning of communications networks and their nodes, such as base stations, eNBs, gNBs, and/or UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations used for implementing functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

### PARTIAL GLOSSARY:

- AMF: Access and Mobility Management Function
- AS: Access Sratum
- CN: Core Network
- CP: Control plane
- F1: F1 network interface between a gNB-CU and gNB-DU
- NR: 5G New Radio
- PDCCH: Physical Downlink Control Channel
- RAN: Radio Access Network
- RANAC: RAN Area Code
- RNA: RAN Notification area
- RNAU: RAN Notification area Update
- RRC: Radio Resource Control protocol
- SDT: Small Data Transmission
- UE: User Equipment
- UP: User Plane
- UPF: User Plane Function
- X2: X2 network interface between eNBs
- Xn: Xn network interface between gNBs

## Claims

1. A method, comprising:
receiving, at a user equipment, UE, a configuration for the apparatus on a radio access network, RAN, notification area, RNA, from a network node, wherein the RNA comprises a set of RAN areas, and wherein one or more of the RAN areas have a unique radio access network area code, RANAC;
performing RAN-based Notification Area Update according to the RANAC, of a RAN mobility layer that has been configured to the UE.

2. An apparatus, comprising:
means for receiving a configuration for the apparatus on a radio access network, RAN, notification area ,RNA, from a network node wherein the RNA comprises a set of RAN areas, and wherein one or more of the RAN areas have a unique radio access network area code, RANAC;
means for performing RAN-based Notification Area Update according to the RANAC, of a RAN mobility layer that has been configured to the apparatus.

3. The apparatus according to claim 2, wherein the means for receiving comprises receiving the indication of the RNA when the apparatus has moved to a radio resource control inactive state.

4. The apparatus according to any one of claims 2-3, further comprises means for sending a request to the network node by requesting a service or slice, and wherein a size of the RNA is based on the requested service or slice.

5. The apparatus according to claim 4, wherein:
when the requested service is a delay tolerant service, the RNA is configured to have a larger size;
when the requested service is a delay stringent service, the RNA is configured to have a smaller size.

6. The apparatus according to any one of claims 2-5, the unique RANAC is received in a system information block (SIB) of each cell.

7. A method, comprising:
determining or configuring, for at least one user equipment, UE, requesting a service or slice, a radio access network notification area, RNA;
providing the configured RNA to the at least one user equipment, wherein a size of the RNA is based on the requested service or slice.

8. An apparatus, comprising:
means for determining or configuring, for at least one user equipment, UE, requesting a service or slice, a radio access network notification area, RNA;
means for providing the configured RNA to the at least one user equipment, wherein a size of the RNA is based on the requested service or slice.

9. The apparatus according to claim 8, wherein
when the requested service is a delay tolerant service, the RNA is configured to have a larger size;
when the requested service is a delay stringent service, the RNA is configured to have a smaller size.

10. The apparatus according to any one of claims 8-9, wherein the configured RNA comprises a set of radio access network, RAN, areas, and wherein one or more of the RAN areas have a unique radio access network area code, RANAC.

11. The apparatus according to any one of claims 8-10, wherein the means for determining comprises at least one of:
defining one or more RAN areas statically, wherein a size of the RAN areas is based on a delay sensitivity of a service among the set of services to be provided in the RAN area; and
dividing a tracking area of a public land mobile network, PLMN, semi-statically in substantially same-sized non-overlapping RAN areas, wherein a number of cells per RAN area are set based on the services to be provided;
assigning a RANAC to each defined RAN area and exchanging between gNBs over Xn the defined RAN areas or RANACs with cells in the tracking area, along with estimated packet delay budget for UE AS context retrieval or data forwarding within a RAN area; and
broadcasting the unique RANAC in a system information block of each cell.

12. The apparatus according to claim 11, wherein the means for determining comprises:
assigning the at least one UE's RNA as a set of RAN areas based on the services requested by the UEs; and
for a UE requesting a delay stringent service, when an anchor cell's RAN area can ensure to meet the packet delay budget for the at least one UE, configuring the at least one UE's RNA comprising a cell with RANAC to be equal to RANAC of the anchor cell;
for the UE requesting a delay stringent service, when the anchor cell's RAN area cannot ensure the packet delay budget, configuring the at least one UE's RNA to be equal to a dedicated list of cells comprising at least one of the anchor cell or a limited set of neighbors among the ones having direct Xn connectivity with the anchor cell;
for the UE requesting a prioritized delay tolerant service, configuring the at least one UE's RNA comprising the cell with RANAC to be equal to: {RANAC of the anchor cell; M neighbor RANACs}, where M is a network parameter that depends on target RAN-based notification area update rate, paging delay, or other threshold; and
for a UE requesting a best effort delay tolerant service, configuring the at least one UE's RNA comprising the cell with RANAC to be equal to Tracking Area Code.

13. The apparatus according to claim 8, wherein the means for determining comprises configuring the RNA to include a single radio access network area code, RANAC, or RAN area, wherein a size of the RNA is defined flexibly based on the requested service class or slice; and wherein the configuring comprises splitting a tracking area into a certain number of service-based RAN Areas or RANACs per service to support.

14. The apparatus according to claim 13, wherein each set of the service-based RANACs in the tracking area assigned for service or slice is denoted as a RAN mobility layer for the given service or slice, and wherein the RAN mobility layer is associated to a given service or slice in the entire tracking area.

15. The apparatus according to claim 13, further comprising means for scaling the size of the RNA downwards or upwards based on needs of the service class and/or slice to support.
